(19) Europäisches Patentamt
European Patent Office
Office européen des brevets

(11) **EP 1 670 851 B1**

(12) **EUROPÄISCHE PATENTSCHRIFT**

(45) Veröffentlichungstag und Bekanntmachung des Hinweises auf die Patenterteilung:
**12.12.2012   Patentblatt 2012/50**

(21) Anmeldenummer: **04766845.4**

(22) Anmeldetag: **23.09.2004**

(51) Int Cl.:
*C08L 21/00* (2006.01)          *C08L 23/10* (2006.01)

(86) Internationale Anmeldenummer:
**PCT/EP2004/052288**

(87) Internationale Veröffentlichungsnummer:
**WO 2005/033185 (14.04.2005 Gazette 2005/15)**

(54) **MIKROGEL-ENTHALTENDE THERMOPLASTISCHE ELASTOMER- ZUSAMMENSETZUNG**

THERMOPLASTIC ELASTOMER COMPOSITION CONTAINING MICROGELS

COMPOSITION ELASTOMERE THERMOPLASTIQUE CONTENANT DU MICROGEL

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.09.2003   DE 10345043**

(43) Veröffentlichungstag der Anmeldung:
**21.06.2006   Patentblatt 2006/25**

(73) Patentinhaber: **Lanxess Deutschland GmbH
51369 Leverkusen (DE)**

(72) Erfinder:
• **HEILIGER, Ludger
  67433 Neustadt (DE)**
• **FRÜH, Thomas
  67117 Limburgerhof (DE)**
• **MÜLLER, Volker
  76661 Philippsburg (DE)**
• **TEBBE, Heiko
  41539 Dormagen (DE)**
• **OBRECHT, Werner
  47447 Moers (DE)**
• **SCHUSTER, Robert, Hans
  30519 Hannover (DE)**
• **Dr. MÜLLER, Martin
  30659  Hannover (DE)**

(74) Vertreter: **Siegers, Britta et al
Lanxess Deutschland GmbH
LIP Intellectual Property Rights
Gebäude Q 18
51369 Leverkusen (DE)**

(56) Entgegenhaltungen:
EP-A- 0 122 516          EP-A- 0 153 587
EP-A- 0 259 097          EP-A- 0 292 251
EP-A- 0 462 471          EP-A- 0 656 388
WO-A-02/08328            DE-A- 19 826 343
DE-A- 19 921 415         US-A- 5 075 380

• PATENT ABSTRACTS OF JAPAN Bd. 0123, Nr. 12 (C-523), 24. August 1988 (1988-08-24) & JP 63 081158 A (JAPAN SYNTHETIC RUBBER CO LTD), 12. April 1988 (1988-04-12)

**Beschreibung**

EINLEITUNG:

Die vorliegende Erfindung betrifft eine thermoplastische Werkstoffe sowie vernetzte Mikrogele, die nicht durch energiereiche Strahlung vernetzt sind, enthaltende thermoplastische Elastomer-Zusammensetzung, Verfahren zu ihrer Herstellung, ihre Verwendung zur Herstellung thermoplastisch verarbeitbarer Formartikel, sowie aus der thermoplastischen Elastomer-Zusammensetzung hergestellte Formartikel.

STAND DER TECHNIK

Der Einsatz von Mikrogelen zur Eigenschaftssteuerung von Elastomeren ist bekannt (z.B. EP-A-405216, DE-A 4220563, GB-PS 1078400, DE 19701487, DE 19701489, DE 19701488, DE 19834804, DE 19834803, DE 19834802, DE 19929347, DE 19939865, DE 19942620, DE 19942614, DE 10021070, DE 10038488, DE10039749, DE 10052287, DE 10056311 und DE 10061174). In den Druckschriften EP-A-405216, DE-A-4220563 sowie in GB-PS-1078400 wird die Verwendung von CR-, BR- und NBR-Mikrogelen in Mischungen mit doppelbindungshaltigen Kautschuken beansprucht. In DE 19701489 wird die Verwendung von nachträglich modifizierten Mikrogelen in Mischungen mit doppelbindungshaltigen Kautschuken wie NR, SBR und BR beschrieben.

Die Verwendung von Mikrogelen zur Herstellung von thermoplastischen Elastomeren wird in keiner dieser Schriften gelehrt.

In Chinese Journal of Polymer Science, Band 20, Nr. 2, (2002), 93 - 98, werden durch energiereiche Strahlung vollständig vernetzte Mikrogele und ihre Verwendung zur Erhöhung der Schlagzähigkeit von Kunststoffen beschrieben. Ähnlich offenbart die US 20030088036 A1 verstärkte wärmehärtende Harzzusammensetzungen, bei deren Herstellung ebenfalls strahlenvemetzte Mikrogelpartikel mit wärmehärtenden Prepolymeren vermischt werden (s. a. EP 1262510 A1). In diesen Druckschriften wird als bevorzugte Strahlungsquelle zur Herstellung der Mikrogelpartikel eine radioaktive Cobaltquelle erwähnt. Durch den Einsatz der Strahlenvemetzung werden sehr homogen vernetzte Mikrogel-Partikel erhalten. Nachteilig ist an dieser Art der Vernetzung jedoch insbesondere, dass eine Übertragung dieses Verfahrens aus dem Labormaßstab in eine großtechnische Anlage sowohl unter ökonomischen Gesichtspunkten als auch unter Arbeitssicherheitsaspekten nicht realistisch ist. Nicht durch energiereiche Strahlung vernetzte Mikrogele werden in den genannten Druckschriften nicht verwendet. Weiterhin ist bei der Verwendung vollständig strahlenvernetzter Mikrogele die Moduländerung von der Matrixphase zur dispergierten Phase unmittelbar. Hierdurch kann es bei schlagartiger Beanspruchung zu Abreißeffekten zwischen Matrix und dispergierter Phase kommen, wodurch die mechanischen Eigenschaften, das Quellverhalten und die Spannungsrisskorrosion etc. beeinträchtigt werden.

Aus der DE 3920332 sind kautschukverstärkte Harzzusammensetzungen bekannt, die (i) ein Matrixharz mit einer Glasübergangstemperatur von mindestens 0°C und (ii) 1 bis 60 Gew.-% in dem Matrixharz dispergierter Kautschukteilchen umfassen. Die dispergierten Teilchen sind dadurch gekennzeichnet, daß sie aus hydrierten Blockcopolymeren aus einem konjugierten Dien und einer vinylaromatischen Verbindung bestehen. Die Teilchen weisen zwangsläufig zwei Glasübergangstemperaturen auf, wobei die eine bei -30°C oder weniger liegt. Die Teilchen weisen eine Mikrophasen-Struktur aus getrennten Mikrophasen mit harten Segmenten und weichen Segmenten auf, in der die harten Segmente und die weichen Segmente abwechselnd in Form von konzentrischen Mehrfachschichten miteinander laminiert sind. Die Herstellung dieser speziellen Teilchen ist sehr aufwändig, da man von den Ausgangsprodukten für die Teilchen (Blockcopolymere) zuerst eine Lösung in organischen Lösungsmitteln herstellen muss. Im zweiten Schritt setzt man Wasser und gegebenenfalls Emulgatoren zu, dispergiert die organische Phase in geeigneten Aggregaten, zieht anschließend das Lösungsmittel ab und fixiert dann die in Wasser dispergierten Teilchen durch Vernetzung mit einem Peroxid. Es ist außerdem sehr schwierig, nach diesem Verfahren Teilchengrößen von weniger als 0,25 $\mu$m herzustellen, was nachteilig für das Fließverhalten ist.

Aus der DE 3922103 ist ein Verfahren zur Herstellung von Mischungen thermoplastischer Polymerisate in Pulverform aus wässrigen Emulsionen bekannt durch gemeinsame Koagulation eines teilchenförmigen, teilvernetzten kautschukartigen Copolymerisats und eines thermoplastischen Harzes. Die teilvernetzten kautschukartigen Copolymerisate sind Pfropf-Copolymere und weisen eine Core-Shell-Struktur auf. Es sind also keine statistischen Copolymere. Thermoplastische Elastomer-Zusammensetzungen werden nicht erwähnt. Weiterhin sind die nach diesem Verfahren erhaltenen Kautschuk-Copolymerisate teilvernetzt und weisen eine geringe Vemetzungsdichte auf, so dass der Quellungsindex relativ hoch ist. Derartige, niedrig vernetzte kautschukartige Copolymerisate weisen bei der Einarbeitung in thermoplastische Harze bzw. Thermoplaste eine geringe Formstabilität auf, werden zerschert und die Bruchstücke lagern sich zu unregelmäßig geformten Haufwerken zusammen. Die daraus resultierenden Inhomogenitäten führen zu Fehlstellen in der Oberfläche der thermoplastischen Formkörper (Stippenbildung). Daher sind derartige, niedrig vernetzte kautschukartige Propf-Copolymerisate nachteilig.

Aus der US 5536613 ist ein Verfahren zur Herstellung einer TonerZusammensetzung, die ein Tonerharz enthält, das ein partiell vernetztes thermoplastisches Harz ist. Diese Druckschrift erwähnt jedoch lediglich thermoplastische Partikel. Es werden keine Kautschukpartikel beschrieben.

Aus der DE 10035493 ist ein Verfahren zur Herstellung vernetzter Kautschukpartikel bekannt. Die DE 10035493 offenbart auch die Verwendung der vernetzten Kautschukpartikel als Füllstoff in Kautschuk und Thermoplasten. Die Herstellung thermoplastischer Elastomer-Zusammensetzungen wird jedoch nicht beschrieben. Auch impliziert die Anwendung von vernetzten Kautschukpartikeln als Füllstoff die Verwendung harter Mikrogel-Partikel, die hohe Glastemperaturen von üblicherweise über 100°C aufweisen und mit hohen Peroxidmengen vernetzt sind, so dass keine thermoplastischen Elastomere resultieren können.

Ähnlich beschreibt die JP 02053803 Mikrogele mit einem Styrol-Gehalt von mindestens 70 Gew.-%, die somit Glasübergangstemperaturen von mehr als 50°C aufweisen, also Thermoplaste sind. Thermoplastische Elastomer-Zusammensetzungen können somit nicht gebildet werden.

Die US 4173556 beschreibt "elastoplastische" Zusammensetzungen von Kautschuk und Polyamid. Diese Zusammensetzungen werden durch zwei verschiedene Verfahren hergestellt. Das erste Verfahren ist das Verfahren der dynamischen Vulkanisation, wie oben erwähnt. Das zweite Verfahren beinhaltet die Einarbeitung des Kautschuks durch Mahlen. Die Herstellung und Einarbeitung von Mikrogelen wird nicht beschrieben.

US 5,075,280 offenbart weiche, thermoplastisch verarbeitbare Polymerlegierungen mit elastischen Eigenschaften, die Polyamide und partiell vernetzte partikuläre Kautschukcopolymere enthalten, wobei diese auf Basis von Acrylaten hergestellt werden.

EP 0 153 587A offenbart elastomere thermoplastische Formmassen, die teilkristalline thermoplastische Polymere, wie insbesondere Polyamide, und ein durch Emulsionspolymeriation auf Basis von Acrylaten hergestelltes kautschukelastisches Polymerisat, enthalten.

EP 0 259 097A offenbart Schlagzähigkeitsmodifikatoren, die ebenfalls auf der Basis von Acrylaten sind.

EP 0 122 516A offenbart weiche Polymerlegierungen aus einem Pfropfkautschuk A) und einem teilchenvemetzten kautschukartigen Copolymerisat eines Acrylacrylats D).

DE 199 21 415A offenbart ein Verfahren zur Herstellung von Polymermischungen unter Verwendung von Glycidyl-funktionalisierten Nitrilkautschuken. Bei den Glycidyl-gepfropften Nitrilkautschuken handelt es sich nicht um vernetzte Mikrogele, die durch Emulsionspolymerisation hergestellt werden.

AUFGABENSTELLUNG

Polymerwerkstoffe können nach ihrem Strukturaufbau, ihrem deformationsmechanischen Verhalten und dementsprechend nach ihren Eigenschaften und Anwendungsbereichen in mehrere Gruppen eingeteilt werden. Traditionell stehen auf der einen Seite die amorphen bzw. teilkristallinen Thermoplaste, die aus langen, unvernetzten Polymerketten bestehen. Bei Raumtemperatur sind Thermoplaste hartspröde bis zäh-elastisch. Diese Werkstoffe werden durch Druck und Temperatur plastifiziert und können dabei umgeformt werden. Auf der anderen Seite stehen die Elastomere oder Gummiwerkstoffe. Bei Elastomeren handelt es sich um ein vernetztes Kautschukprodukt. Dabei kann es sich um Natur- oder Synthesekautschuk handeln. Die Kautschuke können nur im unvernetzten Zustand verarbeitet werden. Dann weisen sie ein zähplastisches Verhalten auf. Erst durch Beigabe von Vernetzungschemikalien wie beispielsweise Schwefel oder Peroxid erhält man beim anschließenden Erwärmen ein Vulkanisat bzw. den elastischen Gummi. Bei diesem "Vulkanisationsvorgang" werden die locker fixierten einzelnen Kautschukmoleküle durch Aufbau von chemischen Bindungen untereinander chemisch verknüpft. Hierbei wandelt sich das amorphe Vorprodukt Kautschuk zum Elastomer mit der typischen Gummi-Elastizität um. Der Vulkanisationsvorgang ist nicht reversibel, außer durch thermische oder mechanische Zerstörung.

Die Thermoplastischen Elastomere (im Folgenden kurz TPE) zeigen ein völlig anderes Verhalten. Diese Werkstoffe werden bei Erwärmung plastisch und bei Abkühlung wieder elastisch. Im Gegensatz zur chemischen Vernetzung bei Elastomeren handelt es sich hier um eine physikalische Vernetzung. In ihrer Struktur und in ihrem Verhalten stehen die TPE demnach zwischen den Thermoplasten und den Elastomeren, und sie verbinden die leichte Verarbeitbarkeit der Thermoplaste mit den wesentlichen Eigenschaften von Gummi. Oberhalb von Tg bis zum Schmelzpunkt bzw. bis zur Erweichungstemperatur verhalten sich die TPE wie Elastomere, sind aber bei höheren Temperaturen thermoplastisch verarbeitbar. Durch physikalische Vernetzung zum Beispiel über (teil-)kristalline Bereiche entsteht beim Abkühlen eine thermoreversible Struktur mit elastischen Eigenschaften.

Im Unterschied zur Kautschukverarbeitung liegt bei der Verarbeitung von TPE-Werkstoffen kein Kalt/Warm-Prozeß sondern ein Warm/Kalt-Prozeß zugrunde. Berücksichtigt man vor allem bei weichen, hochelastischen TPE-Materialien das ausgeprägte strukturviskose Schmelz- bzw. Erweichungsverhalten, so können bei der TPE-Verarbeitung die typischen Thermoplastverfahren wie Spritzguß, Extrusion, Hohlkörper, Blasformen und Tiefziehen angewendet werden. Die Produkteigenschaften hängen in erster Linie von der Struktur und der Phasenmorphologie ab; bei Elastomerlegierungen spielen z.B. die Partikelgröße, die Partikelgrößenverteilung oder die Partikelverstreckung der dispersen Phase eine große Rolle. Diese Strukturmerkmale lassen sich bei der Verarbeitung in gewissen Grenzen beeinflussen.

Ein weiterer, wesentlicher Vorteil der TPE-Werkstoffe gegenüber den klassischen, chemisch vernetzten Elastomeren ist in der grundsätzlichen Eignung zur Wiederverwertbarkeit zu sehen. Wie bei allen Kunststoffen wird auch bei den TPE-Werkstoffen ein mit der Zahl der Verarbeitungsschritte steigender Viskositätsabbau festgestellt, der allerdings zu keiner signifikanten Verschlechterung der Produkteigenschaften führt.

Seit der Entdeckung der TPE's zeichnet sich diese Materialklasse dadurch aus, daß sie durch die Kombination von einer Hartphase und einer Weichphase gebildet wird. Die bislang bekannten TPEs werden in zwei Hauptgruppen unterteilt:

- Blockcopolymerisate und
- Legierungen von Thermoplasten mit Elastomeren.

Blockcopolymerisate:

Die Zusammensetzung der Co-Monomere bestimmt das Verhältnis von Hartphase zu Weichphase, bestimmt welche Phase die Matrix darstellt und wie die Endeigenschaften sind. Eine echte Morphologie ist auf molekularer Ebene erkennbar, wenn beispielsweise die Unterschußkomponente aggregiert oder kristallisiert. Problematisch ist bei diesen Materialien die Temperaturabhängigkeit dieser physikalischen Morphologiefixierung, d.h. es gibt eine Grenztemperatur bei der die Morphologiefixierung aufgelöst wird. Dies kann durch damit verbundene Änderungen der Eigenschaften Probleme bei der Verarbeitung hervorrufen.

Zu den Blockpolymeren gehören beispielsweise Styrolblockcopolymere (TPE-S), wie Butadien (SBS)-, Isopren (SIS)- und Ethylen/Butylen (SEBS)-Typen, Polyether-Polyamid-Blockcopolymere (TPE-A), Thermoplastische Copolyester, Polyetherester (TPE-E) und Thermoplastische Polyurethane (TPE-U), die weiter unten im Zusammenhang mit den erfindungsgemäß verwendbaren Ausgangsmaterialien noch näher beschrieben sind.

Die zweite Hauptgruppe des Werkstoffes TPE sind die Elastomerlegierungen. Elastomerlegierungen sind Polymerblends oder - verschnitte, die sowohl Thermoplast- als auch Elastomeranteile enthalten. Die Herstellung erfolgt durch "Verschneiden", d.h. intensives Vermischen in einem Mischgerät (Innenmischer, Extruder, o.ä.) der Rohstoffe. Es können unterschiedlichste Mischungsverhältnisse zwischen der harten Phase und der weichen Phase auftreten. Die weiche Phase kann sowohl unvernetzt (TPE-0) als auch vernetzt vorliegt (TPE-V). Im idealen TPE-Blend liegen kleine Elastomerpartikel, die gleichmäßig feindispers in der Thermoplastmatrix verteilt sind, vor. Je feiner die Verteilung und je höher der Vernetzungsgrad der Elastomerteilchen, um so ausgeprägter sind die elastischen Eigenschaften des resultierenden TPE. Diese TPE-Blends werden beispielsweise durch die sogenannte "dynamischen Vulkanisation" oder Reaktivextrusion hergestellt, bei der die Kautschukteilchen während des Misch- und Dispergierprozesses 'in situ' vernetzt werden (s. z.B. US 5013793). Das Eigenschaftsbild dieser Blends hängt demnach wesentlich vom Anteil, vom Vernetzungsgrad und von der Dispergierung der Kautschukteilchen ab. Durch diese Blendtechnologie sind die verschiedensten Kombinationen herstellbar. Dabei werden die physikalisch-mechanischen Eigenschaften wie auch die chemische Beständigkeit und Verträglichkeit gegenüber Kontaktmedien im wesentlichen durch die Einzeleigenschaften der Blendkomponenten bestimmt. Durch die Optimierung der "Verschnittgüte" und des Vernetzungsgrades lassen sich bestimmte physikalische Eigenschaften verbessern. Trotzdem ist es ein Kennzeichen dieser Klasse, daß die dispergierte Phase unregelmäßig geformt und grobdispers vorliegt. Je weniger verträglich die Polymere sind, desto gröber ist die entstehende Struktur. Technisch interessant sind besonders die nicht verträglichen Kombinationen wie beispielsweise eine dispergierte Phase aus NBR-Kautschuk in einer PP Matrix. Um in diesen Fällen die Verträglichkeit zu verbessern und so die Endeigenschaften des entstehenden Materials in der gewünschten Weise zu beeinflussen, kann vor der dynamischen Vulkanisation ein Homogenisiermittel hinzugesetzt werden. In etwa 1 % des Homogenisiermittels sind für viele Anwendungsfälle ausreichend. Die Homogenisiermittel basieren in der Regel auf Block Co-Polymeren, deren Blöcke mit jeweils einer der Blendphasen verträglich sind. Beide Phasen können hierbei je nach Mengenverhältnissen sowohl die kontinuierliche als auch die diskontinuierliche Phase darstellen. Bisher war es nicht möglich, die Morphologie dieses Materials sicher einzustellen. Zur Erzeugung von besonders feinteiligen dispergierten Phasen sind ggf. große Mengen des Homogenisiermittels notwendig, die jedoch die Grenzeigenschaften des Endmaterials wiederum nachteilig beeinflussen. Technisch hergestellte und kommerziell erhältliche Thermoplastische Vulkanisate zeigen ein Maximum der Verteilung des Durchmessers der dispergierten Phase zwischen 2 $\mu$m und 4 $\mu$m mit einzelnen Volumenelementen bis zu 30 $\mu$m.

Unter den Elastomerlegierungen basieren die gebräuchlichsten Kombinationen auf EPDM mit PP. Weitere Elastomerlegierungen basieren auf NR/PP Blends (thermoplastischer Naturkautschuk), NBR/PP-Blends (NBR = AcrylnitrilButadien-Kautschuk), IIR (XIIR)/PP-Blends (Butyl- oder Halobutylkautschuke als elastomeren Phasenbestandteile), EVA/PVDC-Blends ("Alcryn" Verschnitt von Ethylen-Vinylacetat-Kautschuk (EVA) und Polyvinylidenchlorid (PVDC) als thermoplastische Phase.) und NBR/PVC-Blends. Eine gezielte Einstellung der Morphologie der dispergierten Phase und damit eine gezielte Einstellung der gewünschten Eigenschaften der TPEs in diesen Polymerblend-TPEs ist jedoch aufgrund der "in-situ"-Bildung der dispergierten Phase und der Vielzahl der dabei einfließenden Parameter praktisch nicht möglich.

Die vorliegenden Erfinder stellten sich daher die Aufgabe neue Zusammensetzungen mit thermoplastischen Elastomereigenschaften zu finden, die leicht aus an sich bekannten Ausgangsmaterialien herstellbar sind, und deren Eigenschaften sich in einfacher und vorhersehbarer Weise einstellen lassen. Die neuen Zusammensetzungen sollten im großtechnischen Maßstab herstellbar sein und keine Probleme der Arbeitssicherheit aufwerfen. Weiterhin sollte es in den Zusammensetzungen bei schlagartiger Beanspruchung nicht zu Abreißeffekten zwischen Matrix und dispergierter Phase kommen, so dass die mechanischen die mechanischen Eigenschaften, das Quellverhalten und die Spannungsrisskorrosion etc. beeinträchtigt werden. Die Herstellung der Mikrogele für die Zusammensetzung sollte einfach sein und es erlauben, die Partikelgrößenverteilungen der Mikrogelteilchen gezielt bis zu sehr kleinen durchschnittlichen Partikelgrößen einzustellen.

BESCHREIBUNG DER ERFINDUNG

Zur Lösung dieser Aufgabe wird eine thermoplastische Elastomer-Zusammensetzung der eingangs genannten Art vorgeschlagen, wobei sie mindestens einen thermoplastischen Werkstoff (A), ausgewählt aus PA-6, PA-4, PA-66, PA-69, PA-610, PA-11, PA-12, PA 612, PA-MXD6 und thermoplastischen Elastomeren in Form von thermoplastischen Polyamiden (TPE-A) und mindestens ein nicht durch energiereiche Strahlung vernetztes, durch Emulsionspolymerisation erhaltenes Mikrogel (B) basierend auf Kautschukpartikeln, ausgewählt aus Polybutadien-Acrylnitril-Copolymerisaten (NBR)mit Acrylnitrilgehalten von 5 - 60 Gewichtsprozent, carboxylierten Nitrilkautschuken (X-NBR) und teil- bzw. vollhydrierten Nitrilkautschuken (HNBR) enthält, wobei die Mikrogele eine im wesentlichen einheitliche Kugelform aufweisen, und das Gewichtsverhältnis thermoplastischer Werkstoff (A) / Mikrogel (B) von 1 : 99 bis 99 : 1 beträgt.

Völlig überraschend fanden die Erfinder, dass es möglich ist, durch Einarbeiten von vernetzten Mikrogelen, die nicht durch energiereiche Strahlung vernetzt sind, auf der Basis von Homopolymeren oder statistischen Copolymeren in thermoplastische Werkstoffe Zusammensetzungen mit einer neuartigen Eigenschaftskombination bereitzustellen. Durch die Bereitstellung der neuen Zusammensetzung gelingt es dabei überraschend die o.g. Nachteile der bekannten konventionellen Thermoplasten und TPEs zu überkommen und gleichzeitig thermoplastische Elastomerzusammensetzungen mit hervorragenden Gebrauchseigenschaften bereitzustellen. Da durch das Einarbeiten von Mikrogelen in thermoplastische Werkstoffe thermoplastische Elastomerzusammensetzungen erhalten werden, ist es möglich, die Morphologieeinstellung der dispergierten Phase räumlich und zeitlich von der Herstellung des TPE Materials zu entkoppeln. Die Morphologieherstellung kann sicher reproduziert werden, da die dispergierte Phase ein Mikrogel ist, dessen Morphologie bei der Herstellung in an sich bekannter Weise gesteuert werden kann, und die sich beim Einarbeiten in den thermoplastischen Werkstoff im wesentlichen nicht mehr verändert. In den erfindungsgemäß hergestellten Zusammensetzungen lässt sich die Polymermikrostruktur sowohl der dispergierten Phase als auch der kontinuierlichen Phase in weiten Grenzen verändern, so dass sich maßgeschneiderte TPEs aus beliebigen thermoplastischen Werkstoffen herstellen lassen, was nach den bisherigen Verfahren zur Herstellung der konventionellen TPEs nicht möglich war. Durch Steuerung des Vernetzungsgrads und des Funktionalisierungsgrads in der Oberfläche und im Kern der dispergierten Mikrogele, lassen sich die gewünschten Eigenschaften der resultierenden TPEs weiter steuern. Auch kann die Glasübergangstemperatur der dispergierten Mikrogel-Phase in den Grenzen von -100 °C bis zu weniger als 50 °C gezielt eingestellt werden, wodurch wiederum die Eigenschaften der resultierenden TPEs gezielt eingestellt werden können. Dadurch kann auch die Differenz der Glasübergangstemperaturen zwischen dispergierter Phase und kontinuierlicher Phase gezielt eingestellt werden und beispielsweise zwischen 0°C und 250 °C betragen. Mit der durch die Erfindung bereitgestellten neuen Klasse von TPEs gelingt es außerdem auch thermodynamisch verträgliche und thermodynamisch unverträgliche Polymere zu neuen TPEs zu kombinieren, die nach den konventionellen Verfahren nicht zugänglich waren. In den neuen durch die Erfindung bereitgestellten TPEs können die dispergierte Phase und die kontinuierliche Phase jeweils die Hartphase und die Weichphase darstellen. Durch Steuerung der Eigenschaften der Mikrogele und der Mengenverhältnissen kann die dispergierte Phase in aggregierten Clustern oder gleichmäßig verteilt und in allen Zwischenformen in der Matrix vorliegen.

Dies ist bei den nach herkömmlichen Verfahren hergestellten TPEs, bei denen die dispergierte Phase "in-situ" während der Herstellung der TPEs gebildet wird, nicht möglich.

Weiterhin stellten die Erfinder nicht nur überraschend fest, dass sich durch dass Einarbeiten von Mikrogelen in thermoplastische Kunststoffe thermoplastische Elastomere herstellen lassen sondern dass sich durch dass Einarbeiten von Mikrogelen in beispielsweise nach konventionellen Verfahren hergestellten thermoplastischen Elastomeren, deren Eigenschaften, wie z.B. Formbeständigkeit, Transparenz, gezielt verbessern lassen.

Die erfindungsgemäßen Zusammensetzungen können durch ein einfaches Verfahren in industriellem Maßstab hergestellt werden, ohne die Verwendung von durch energiereiche Strahlung vernetzten Mikrogelen. Die erfindungsgemäß verwendeten Mikrogele erlauben eine weniger unmittelbare Moduländerung zwischen der Matrixphase und der dispergierten Phase, was zu einer Verbesserung der mechanischen Eigenschaften der Zusammensetzung führt.

Besonders überraschend können bei Verwendung thermoplastischer Elastomere als Komponente (A) durch die Einarbeitung der erfindungsgemäß hergestellten Mikrogele (B) die physikalischen Eigenschaften, wie zum Beispiel Transparenz und Ölbeständigkeit verbessert werden.

Die vorliegende Erfindung stellt somit eine thermoplastische Elastomer-Zusammensetzung bereit, die mindestens einen thermoplastischen Werkstoff (A) und mindestens ein nicht durch energiereiche Strahlung vernetztes Mikrogel (B) auf der Basis von Homopolymeren oder statistischen Copolymeren enthält.

Mikrogel- bzw. Mikrogelphase (B)

Das in der erfindungsgemäßen Zusammensetzung verwendete Mikrogel (B) ist ein vernetztes Mikrogel auf der Basis von Homopolymeren oder statistischen Copolymeren. Bei den erfindungsgemäß verwendeten Mikrogelen handelt es sich somit um vernetzte Homopolymere oder vernetzte statistische Copolymere. Die Begriffe Homopolymere und statistische Copolymere sind dem Fachmann bekannt und beispielsweise erläutert bei Vollmert, Polymer Chemistry, Springer 1973.

Das in der erfindungsgemäßen Zusammensetzung verwendete vernetzte Mikrogel (B) ist ein nicht durch energiereiche Strahlung vernetztes Mikrogel. Energiereiche Strahlung meint hier zweckmäßig elektromagnetische Strahlung einer Wellenlänge von weniger als 0,1 $\mu$m.

Die Verwendung von durch energiereiche Strahlung vollständig homogen vernetzten Mikrogelen ist nachteilig, weil sie im großtechnischen Maßstab praktisch nicht durchführbar ist und Probleme der Arbeitssicherheit aufwirft. Weiterhin kommt es in Zusammensetzungen, die unter Verwendung von durch energiereiche Strahlung vollständig homogen vernetzter Mikrogelen hergestellt wurden, bei schlagartiger Beanspruchung zu Abreißeffekten zwischen Matrix und dispergierter Phase, wodurch die mechanischen die mechanischen Eigenschaften, das Quellverhalten und die Spannungsrisskorrosion etc. beeinträchtigt werden.

Die in der erfindungsgemäßen Zusammensetzung enthaltenen Primärpartikel des Mikrogels (B) weisen bevorzugt eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z.B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht eines Dünnschnitts mit einem Elektronenmikroskop erkennbar im wesentlichen eine kreisförmige Fläche bilden (Vgl. z.B. Abb. 1). Dadurch unterscheiden sich die efindungsgemäßen Zusammensetzungen wesentlich von den durch die "in-situ"-Verfahren erzeugten dispergierten Phasen, die im allgemeinen größer sind und eine irreguläre Form aufweisen (Vgl. z.B. Abb. 3). Die erfindungsgemäß dispergierten Mikrogelpartikel behalten ihre aus dem separaten Herstellungsverfahren der Mikrogele resultierende, im wesentlichen einheitliche Kugelform beim Dispergieren im thermoplastischen Werkstoff praktisch ohne Veränderung bei. Eine einfache Unterscheidung zwischen den erfindungsgemäßen, mikrogel-enthaltenden Zusammensetzungen von konventionell hergestellten TPEs ist anhand dieses Kriterium ohne weiteres möglich. In den konventionell hergestellten TPEs weist die dispergierte Phase keine einheitliche Morphologie auf, weshalb dort keine individualisierten Primärpartikel lokalisierbar sind.

In den erfindungsgemäßen Zusammensetzungen können z.B. alle bekannten TPEs, insbesondere TPE-Us oder TPE-As als kontinuierliche Phase verwendet werden. Durch das Einarbeiten der Mikrogele (B) in die bekannten TPEs, insbesondere TPE-Us oder TPE-As kann völlig überraschend die Wärmeformbeständigkeit der TPEs, insbesondere der TPE-Us oder TPE-As verbessert werden. Insbesondere ist auch die Transparenz der erfindungsgemäßen Mikrogel-enthaltenden Zusammensetzungen auf Basis TPE-U oder TPE-A verbessert. Die bekannten TPE-Us sind nicht transparent, während die erfindungsgemäßen Mikrogel-enthaltenden Zusammensetzungen auf Basis TPE-U transparent sind. Durch das Einarbeiten der Mikrogele in TPE-As kann beispielsweise neben deren optischen Eigenschaften, wie Transparenz, deren Ölbeständigkeit überraschend stark verbessert werden.

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser eines beliebigen Schnittes des Primärpartikels sind und d1 > d2 ist, bevorzugt weniger als 250 %, bevorzugter weniger als 200 %, noch bevorzugter weniger als 100 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser eines beliebigen Schnittes des Primärpartikels sind und d1 > d2 ist, von weniger als 250 %, bevorzugter weniger als 200 %, noch bevorzugter weniger als 100 % noch bevorzugter weniger als 50 % auf.

Die vorstehend erwähnte Abweichung der Durchmesser der einzelnen Partikel wird nach folgendem Verfahren bestimmt. Zunächst wird wie in den Beispielen beschrieben eine TEM-Aufnahme eines Dünnschnitts der erfindungsgemäßen Zusammensetzung hergestellt. Dann wird eine transmissionselektronenmikroskopische Aufnahme bei einer Vergrößerung von 10000fach bis 85000fach hergestellt. In einer Fläche von 833,7 x 828,8 nm wird manuell an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400, noch bevorzugter von 30 bis 300, noch bevorzugter 40 bis 100 nm auf (Durchmesserangaben nach DIN 53206).

Da sich die Morphologie der Mikrogele beim Einarbeiten in den thermoplastischen Werkstoff (A) im wesentlichen nicht verändert, entspricht der durchschnittliche Teilchendurchmesser der dispergierten Primärpartikel im wesentlichen dem durchschnittlichen Teilchendurchmesser des verwendeten Mikrogels. Bevorzugt weisen die Primärpartikel des Mikrogels (B) eine durchschnittliche Teilchengröße von weniger als 99 nm auf.

In der erfindungsgemäßen Zusammensetzung weisen die eingesetzten Mikrogele (B) zweckmäßig in Toluol bei 23°C unlösliche Anteile (Gelgehalt) von mindestens etwa 70 Gew.-%, bevorzugter mindestens etwa 80 Gew.-%, noch bevorzugter mindestens etwa 90 Gew.-% auf. Der in Toluol unlösliche Anteil wird dabei in Toluol bei 23° bestimmt. Hierbei werden 250 mg des Mikrogels in 25 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

In der erfindungsgemäßen Zusammensetzung weisen die eingesetzten Mikrogele (B) zweckmäßig in Toluol bei 23°C einen Quellungsindex von weniger als etwa 80, bevorzugter von weniger als 60 noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23° für 24 Stunden gequollenen lösungsmittelhaltigen Mikrogels (nach Zentrifugation mit 20.000 Upm) und dem Gewicht des trockenen Mikrogels berechnet:

Qi = Naßgewicht des Mikrogels /Trockengewicht des Mikrogels.

Zur Ermittlung des Quellungsindex läßt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfindungsgemäßen Zusammensetzung weisen die eingesetzten Mikrogele (B) zweckmäßig Glastemperaturen Tg von -100°C bis +50°C, bevorzugter von -80°C bis +20°C auf.

In der erfindungsgemäßen Zusammensetzung weisen die eingesetzten Mikrogele (B) zweckmäßig eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase nicht unmittelbar ist. Hierdurch kommt es bei schlagartiger Beanspruchung nicht zu Abreißeffekten zwischen Matrix und dispergierter Phase, wodurch die mechanischen Eigenschaften, das Quellverhalten und die Spannungsrisskorrosion etc. vorteilhaft beeinflusst werden.

Die Bestimmung der Glastemperatur (Tg) und der Breite des Glasübergangs ($\Delta$Tg) der Mikrogele erfolgt mittels Differential-Scanning-Kalorimetrie-(DSC). Für die Bestimmung von Tg und $\Delta$g werden zwei Abkühl/Aufheiz-Zyklen durchgeführt. Tg und $\Delta$Tg werden im zweiten AufheizZyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und $\Delta$Tg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, nicht durch energiereiche Strahlung vernetzten Mikrogele (B) auf der Basis von Homopolymeren oder statistischen Copolymeren können in an sich bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben. Unter Mikrogelen werden erfindungsgemäß zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | statistische Styrol-Butadien-Copolymerisate mit Styrolgehalten von 1-60, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1. Emulsionspolymerisation
2. Außerdem können natürlich vorkommende Latices wie z.B. Naturkautschuklatex eingesetzt werden.

In der erfindungsgemäßen thermoplastischen Elastomer-Zusammensetzung sind die verwendeten Mikrogele (B) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluorid, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure etc., doppelbindungshaltige Hydroxyverbindungen wie z.B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff, sekundäre Amino-(meth)-acrylsäureester wie 2-tert-Butylaminoethylmethacrylat und 2-tert-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoyl-peroxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß verwendeten Herstellungsverfahren werden stets nicht vollständig homogen vernetzte Mikrogele erhalten, die die oben beschriebenen Vorteile aufweisen können.

Als Mikrogele zur Herstellung der erfindungsgemäßen Zusammensetzung können sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit mit der Matrix, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrrolidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z.B. durch Ozonolyse sowie durch Halogenierung mit Chlor, Brom und Jod kommen infrage. Auch eine weitere Umsetzung modifizierter Mikrogele wie z.B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf, unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von unmodifizierten Mikrogelen ist insbesondere bei unpolaren thermoplastischen Werkstoffen (A) bevorzugt, wie zum Beispiel bei Polypropylen, Polyethylen und Blockcopolymeren auf Basis von Styrol, Butadien und Isopren (SBR, SIR) sowie hydrierten Isopren-Styrol-Blockcopolymeren (SEBS), und üblichen TPE-Os und TPE-Vs, etc.

Die Verwendung von modifizierten Mikrogelen ist insbesondere bei polaren thermoplastischen Werkstoffen (A) bevorzugt, wie PA, TPE-A, PU, TPE-U, PC, PET, PBT, POM, PMMA, PVC, ABS, PTFE, PVDF, etc.

Der mittlere Durchmesser der hergestellten Mikrogele kann mit hoher Genauigkeit beispielsweise auf 0,1 Mikrometer (100 nm) $\pm$ 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele inbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von $\pm$ 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden. Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Die Einstellung der Morphologie der dispergierten Phase der nach dem Stand der Technik durch "in-situ-Reactive Processing" oder dynamische Vulkanisation hergestellten TPEs ist mit dieser Präzision nicht möglich.

Die Aufarbeitung der so hergestellten Mikrogele kann beispielsweise durch Eindampfen, Koagulation, durch Co-koagulation mit einem weiteren Latexpolymer, durch Gefrierkoagulation (vgl. US-PS 2187146) oder durch Sprühtrocknung erfolgen. Bei der Aufarbeitung durch Sprühtrocknung können auch handelsübliche Fließhilfsmittel wie beispielsweise $CaCO_3$ oder Kieselsäure zugesetzt werden.

Thermoplastische Werkstoffe (A)

In der erfindungsgemäßen Zusammensetzung weisen die eingesetzten thermoplastischen Werkstoffe (A) bevorzugt eine Vicat-Erweichungstemperatur von mindestens 50°C, bevorzugter von mindestens 80 °C auf noch bevorzugter von mindestens 100°C auf.

Die Vicat-Erweichungstemperatur wird bestimmt nach DIN EN ISO 306 : 1996.

In der erfindungsgemäßen Zusammensetzung wird der thermoplastische Werkstoff (A) zweckmäßig ausgewählt aus thermoplastischen Polymeren (A1) und thermoplastischen Elastomeren (A2).

Werden thermoplastischen Polymeren (A1) als Ausgangsmaterial der erfindungsgemäßen Zusammensetzung verwendet, so bilden sich durch das Einarbeiten der erfindungsgemäß verwendeten Mikrogele die thermoplastischen Elastomer-Zusammensetzungen.

Werden hingegen thermoplastische Elastomere (A2) als Ausgangsmaterial der erfindungsgemäßen Zusammensetzung verwendet, so bleiben die thermoplastischen Elastomereigenschaften erhalten, und die Eigenschaften der thermoplastische Elastomere (A2) können durch den Zusatz der Mikrogele (B) geeigneter Zusammensetzung und geeigneter Morphologie gezielt, wie unten gezeigt, modifiziert werden.

So lassen sich durch das Einarbeiten der Mikrogele (B) die Eigenschaften der bekannten TPEs, wie TPE-U und TPE-A verbessern, wie insbesondere die Wärmeformbeständigkeit und Transparenz der TPE-Us oder die Ölbeständigkeit der TPE-As.

In der erfindungsgemäßen Zusammensetzung beträgt der Unterschied der Glastemperatur zwischen dem thermoplastischen Werkstoff (A) und dem Mikrogel (B) zweckmäßig zwischen 0 und 250°C.

In der erfindungsgemäßen Zusammensetzung beträgt das Gewichtsverhältnis thermoplastischer Werkstoff (A) / Mikrogel (B) zweckmäßig von 1 : 99 bis 99 : 1, bevorzugt von 10 : 90 bis 90 : 10, besonders bevorzugt 20 : 80 bis 80 : 20.

Werden thermoplastischen Polymere (A1) als thermoplastischen Werkstoffe (A) verwendet, beträgt das Verhältnis Gewichtsverhältnis (A1)/(B) bevorzugt 95 : 5 bis 30 : 70.

Werden thermoplastischen Elastomere (A2) als thermoplastischen Werkstoffe (A) verwendet, beträgt das Verhältnis Gewichtsverhältnis (A2)/(B) bevorzugt 98 : 2 bis 20 : 80, bevorzugter 95 : 5 bis 20 : 80.

Die Erfindung schließt auch die Verwendung der erfindungsgemäßen thermoplastischen Elastomer-Zusammensetzung als sogenannter Masterbatch (Konzentrat) für die Einarbeitung in thermoplastische Werkstoffe ein. Solche Masterbatche weisen naturgemäß hohe Mikrogelkonzentrationen auf, wie beispielsweise von mehr als 30 Gew.-%.

Thermoplastische Polymere (A1)

Die in der erfindungsgemäßen thermoplastischen Elastomer-Zusammensetzung einsetzbaren thermoplastischen Polymere (A1) schließen beispielsweise Standard-Thermoplaste, sogenannte Techno-Thermoplaste und sogenannte Hochleistungs-Thermoplaste (Vgl. H.G. Elias Makromoleküle Band 2, 5 Aufl., Hüthig & Wepf Verlag , 1992, Seite 443 ff) ein.

Die in der erfindungsgemäßen Zusammensetzung einsetzbaren thermoplastischen Polymere (A1) schließen beispielsweise unpolare thermoplastische Werkstoffe ein, wie zum Beispiel bei Polypropylen, Polyethylen, wie HDPE, LDPE, LLDPE, Polystyrol etc. und polare thermoplastische Werkstoffe, wie PU, PC, EVM, PVA, PVAC, Polyvinylbutyral, PET, PBT, POM, PMMA, PVC, ABS, AES, SAN, PTFE, CTFE, PVF, PVDF, Polyimide, PA, wie insbesondere PA-6 bevorzugter PA-4, PA-66 , PA-69, PA-610, PA-11, PA-12, PA 612 and PA-MXD6

Thermoplastische Elastomere (A2)

Die In der erfindungsgemäßen mikrogel-enthaltenden thermoplastischen Elastomer-Zusammensetzung einsetzbaren thermoplastischen Elastomere (A2) schließen beispielsweise die oben bereits erwähnten, aus dem Stand der Technik bekannten thermoplastischen Elastomere ein, wie die Block-Copolymere, wie Styrol-Block-Copolymere (TPE-S: SBS, SIS, sowie hydrierte Isopren-Styrol-Blockcopolymeren (SEBS), thermoplastische Polyamide (TPE-A), thermoplastische Copolyester (TPE-E), thermoplastische Polyurethane (TPE-U), die genannte Blends aus Thermoplasten und Elastomeren, wie thermoplastische Polyolefine (TPE-O) und thermoplastische Vulkanisate (TPE-V), NR/PP Blends (thermoplastischer Naturkautschuk), NBR/PP-Blends, IIR (XIIR)/PP-Blends, EVA/PVDC-Blends, NBR/PVC-Blends, etc. Weiterhin kann auf die Beschreibung der oben genannten TPEs aus dem Stand der Technik verwiesen werden.

Beispiele der Blockpolymerisate, die erfindungsgemäß als thermoplastisches Elastomer (A2) bevorzugt verwendet werden können, schließen die Folgenden ein:

Styrolblockcopolymere (TPE-S)

Der Dreiblock-Aufbau aus zwei thermoplastischen Polystyrol-Endblöcken und einem elastomeren Mittelblock kennzeichnet diese Gruppe. Die Polystyrol-Hartsegmente bilden Domänen aus, d.h. kleine Volumenelemente mit einheitlicher Stoffcharakteristik, die technisch als räumliche, physikalische Vernetzungsstellen für die flexiblen Weichsegmente wirken. Nach der Art des Mittelblocks werden folgende Styrolblockcopolymere unterschieden: Butadien (SBS)-, Isopren (SIS)-und Ethylen/Butylen (SEBS)-Typen. Durch Verknüpfung über mehrfunktionelle Zentren sind verzweigte Blockcopolymertypen herstellbar.

Polyether-Polyamid-Blockcopolymere (TPE-A)

Die Blockcopolymere auf Basis Polyether(ester)-Polyamid entstehen durch Einfügen von flexiblen Polyether (ester)gruppen in Polyamidmolekolketten. Die Polyether(ester)-Blöcke bilden die weichen und elastischen Segmente, während die harten Polyamid-Böcke die Funktion der thermoplastischen Hartphase übernehmen. Die Hartsegmente erhalten ihre hohe Festigkeit durch eine hohe Dichte an aromatischen Gruppen und/oder Amidgruppen, die durch Wasserstoffbrückenbildung für die physikalische Vernetzung der beiden Phasen verantwortlich sind.

Thermoplastische Copolyester, Polyetherester (TPE-E)

Thermoplastische Copolyester sind alternierend aus harten Polyestersegmenten und weichen Polyetherkomponenten aufgebaut. Die Polyester-Blöcke, gebildet aus Diolen (z.B. Butandiol-1,4) und Dicarbonsäuren (z.B. Terephtalsäure), werden mit langkettigen Polyethern, die HydroxylEndgruppen tragen, in einer Kondensationsreaktion verestert. Je nach Länge der harten und weichen Segmente können sehr unterschiedliche Härtebereiche eingestellt werden.

Thermoplastische Polyurethane (TPE-U)

Die Blockcopolymere des Polyurethans werden durch Polyaddition von Diolen und Diisocyanaten synthetisiert. Die aus der Reaktion zwischen Diisocyanat und einem Polyol entstehenden Weichsegmente fungieren bei mechanischer Beanspruchung als elastische Komponenten. Die als Vernetzungsstellen dienenden Hartsegmente (Urethan-Gruppen) erhält man durch Reaktion des Diisocyanats mit einem niedermolekularen Diol zur Kettenverlängerung. Wie bei den TPE-S Typen bilden die fein verteilten Hartsegmente Domänen, die eine Quasi-Vernetzung über Wasserstoffbrücken bzw. allgemein über Ordnungszustände bewirken, indem jeweils zwei oder mehr Domänen in Beziehung zueinander treten. Es kann hierbei zu einer Kristallisation der Hartsegmente kommen. Je nach eingesetztem Diol als Ausgangsmonomer unterscheidet man zwischen Polyester-, Polyether- und chemisch kombinierten Polyester/Polyethertypen.

Hinsichtlich der zweiten Untergruppe des thermoplastischen TPEs (A2), den Elastomerlegierungen kann zu den Ausführungen verwiesen werden, die oben im Zusammenhang mit dem Stand der Technik gemacht wurden. Erfindungsgemäß anwendbare Elastomerlegierungen schließen beispielsweise die Folgenden ein:

EPDM/PP-Blends

Für die Kautschukphase werden in der Regel EPDM- Terpolymere eingesetzt, als Polyolefin wird meist Polypropylen verwendet. Die weiche Phase kann sowohl unvernetzt (TPE-O) als auch vernetzt vorliegt (TPE-V). Bei überwiegendem PP-Anteil stellt der Thermoplast die kontinuierliche Phase dar. Bei sehr hohem Elastomergehalt kann sich die Struktur auch umkehren, so daß PP verstärkte EPDM-Blends resultieren. Daher deckt diese Klasse von Elastomerlegierungen einen großen Härtebereich ab. Alle Vertreter zeichnen sich durch hohe Beständigkeit gegenüber UV-Strahlung und Ozon sowie gegen viele organische und anorganische Medien aus. Die Resistenz gegenüber aliphatischen und aromatischen Lösungsmitteln ist dagegen schlecht bis mäßig.

NR/PP Blends (thermoplastischer Naturkautschuk)

In ähnlicher Weise wie EPDM kann auch NR mit PP und auch mit PP/PE-Gemischen zu einem thermoplastisch verarbeitbaren Naturkautschuk (TPNR) compoundiert werden. Die dynamische Vernetzung von NR erfolgt in der Regel in Gegenwart von Peroxiden oberhalb von 170 °C. Im Vergleich zu herkömmlichen NR-Vulkanisaten weisen TPNR-Blends eine deutlich höhere Witterungs- und Ozonbeständigkeit auf.

NBR/PP-Blends

Bei diesen Polymerblends ist vor- bzw. teilvernetzter Acrylnitril-Butadien-Kautschuk (NBR) als elastomere Phase in der PP-Hartphase dispergiert. Charakteristische Merkmale dieser Blends sind hohe Beständigkeiten gegenüber Kraftstoffen, Ölen, Säuren und Alkalien sowie gegenüber Ozon und Witterungseinflüssen.

IIR (XIIR)/PP-Blends

Butyl- oder Halobutylkautschuke stellen bei dieser Klasse die elastomeren Phasenbestandteile dar. Auf der Basis eines Dienkautschuks mit unpolarem Charakter (vergleichbar NR/IR) werden hier die ausgezeichneten Permeationseigenschaften von Butylkautschuk gegenüber vielen Gasen für das Eigenschaftsprofil der im Verschnitt mit PP erhältlichen TPE-Blends ausgenutzt.

EVA/PVDC-Blends

Diese basieren auf einem Verschnitt von Ethylen-Vinylacetat-Kautschuk (EVA) und Polyvinylidenchlorid (PVDC) als thermoplastische Phase. Das Eigenschaftsbild im mittleren Härtebereich von 60 bis 80 ShA ist geprägt durch eine gute Öl- und eine hervorragende Witterungsbeständigkeit.

NBR/PVC-Blends

Diese, hauptsächlich zur Verbesserung der Eigenschaften von Weich-PVC hergestellten Polymerblends, stellen Mischungen aus Acrylnitril- Butadien-Kautschuk (NBR) und Polyvinylchlorid (PVC) dar. Insbesondere bei Forderungen nach besserer Öl- bzw. Fettbeständigkeit sind die mit hohen Weichmacheranteilen ausgestatteten Weich-PVC Qualitäten nicht mehr einsetzbar (Weichmacherextraktion). NBR wirkt bei diesen NBR/PVC Blends als polymerer, nicht extrahierbarer Weichmacher und kann mit PVC in nahezu jedem Verhältnis gemischt werden.
Besonders bevorzugte thermoplastische Elastomere (A2) schließen ein: TPE-U, TPE-A und TPE-V.
Bevorzugte erfindungsgemäße thermoplastische Elastomer-Zusammensetzungen enthalten TPE-U, TPE-A, PA oder PP als thermoplastischer Werkstoff (A) und vernetzte NBR oder SBR-Mikrogele, die OH-modifiziert sein können.
Besonders bevorzugt sind folgende Kombinationen der Komponenten (A) und (B):

| Thermoplastischer Werkstoff (A) | Mikropel (B) auf Basis |
|---|---|
| TPE-U | SBR (OH-modifiziert) peroxidisch vernetzt |
| PP | SBR (OH-modifiziert) EGDMA-vernetzt |
| PP | SBR (nicht modifziert) DVB-vernetzt |
| TPE-A | SBR (OH-modifiziert) EGDMA-vernetzt |
| PP | NBR peroxidisch vernetzt |
| PA | NBR peroxidisch vernetzt |

Die erfindungsgemäßen Zusammensetzungen verhalten sich wie thermoplastische Elastomere, d.h. sie verbinden die Vorteile der thermoplastischen Verarbeitbarkeit mit den Eigenschaften der Elastomere wie in der Einleitung im Zusammenhang mit den TPEs aus dem Stand der Technik beschrieben.
Die erfindungsgemäßen Zusammensetzungen können zusätzlich mindestens ein übliches Kunststoffadditiv enthalten, wie anorganische und/oder organische Füllstoffe, Weichmacher, anorganische und/oder organische Pigmente, Flammschutzmittel, Mittel gegen Schädlinge, wie z.B. Termiten, Mittel gegen Marderbiss, etc. und sonstige üblichen Kunststoffadditiven. Diese können in den erfindungsgemäßen Zusammensetzungen in einer Menge von bis zu etwa 40 Gew.-%, bevorzugt bis zu etwa 20 Gew.-%, bezogen auf die Gesamtmenge der Zusammensetzung enthalten sein.
Die erfindungsgemäßen Zusammensetzungen sind erhältlich durch Mischen mindestens des thermoplastischen Werkstoffes (A), ausgewählt aus PA-6, PA-4, PA-66, PA-69, PA-610, PA-11, PA-12, PA 612, PA-MXD6 und thermoplastischen Elastomeren in Form von thermoplastischen Polyamiden (TPE-A) und des nicht durch energiereiche Strahlung vernetzten Mikrogel (B) basierend auf Kautschukpartikeln, ausgewählt aus Polybutadien-Acrylnitril-Copolymerisaten (NBR) mit Acrylnitrilgehalten von 5-60 Gewichtsprozent, carboxylierten Nitrilkautschuken (X-NBR) und teilbzw. vollhydrierten Nitrilkautschuken (HNBR), wobei die Mikrogele eine im wesentlichen einheitliche Kugelform aufweisen, und das Gewichtsverhältnis thermoplastischer Werkstoff (A) / Mikrogel (B) von 1 : 99 bis 99 : 1 beträgt.
Die vorliegende Erfindung betrifft weiterhin die Verwendung von vernetzten Mikrogelen (B), die nicht durch die Anwendung energiereicher Strahlung vernetzt sind, in thermoplastischen Werkstoffen (A). Hinsichtlich der bevorzugten Varianten der Komponenten (A) und (B) kann dabei zu den vorstehenden Erläuterungen verwiesen werden.
Des weiteren betrifft die vorliegende Erfindung auch die Verwendung der erfindungsgemäßen thermoplastischen Elastomer-Zusammensetzungen als Masterbatch zur Einarbeitung in thermoplastische Werkstoffe oder zur Herstellung von thermoplastisch verarbeitbaren Formartikeln.

Herstellung der erfindungsgemäßen Zusammensetzungen

Die vorliegende Erfindung betrifft weiterhin ein Verfahren zur Herstellung der erfindungsgemäßen Zusammensetzungen durch Mischen mindestens eines thermoplastischen Werkstoffes (A) und mindestens eines Mikrogels (B). Die Herstellung der erfindungsgemäßen Zusammensetzungen erfolgt im allgemeinen so, dass das Mikrogel (B) vor dem Mischen mit dem thermoplastischen Werkstoff (A) separat hergestellt wird.

Die erfindungsgemäßen Zusammensetzungen enthaltend (gegebenenfalls) modifiziertes Mikrogel (B) und den thermoplastischen Werkstoff (A) können auf verschiedene Arten hergestellt werden: Zum einen ist selbstverständlich möglich, die Einzelkomponenten zu mischen. Dafür geeignete Aggregate sind beispielsweise Walzen, Mehrwalzenstühle, Dissolver, Innenmischer oder auch Mischextruder.

Als Mischaggregat sind weiterhin die aus der Kunstoff- und Kautschuktechnologie bekannten Mischaggregate (Saechtling Kunststoff Taschenbuch, 24. Ausgabe, S. 61 und S. 148 ff; DIN 24450; Mischen von Kunststoff und Kautschukprodukten, VDI- Kunststofftechnik, S. 241 und ff.), wie z.B. Ko-Kneter, Einschneckenextruder (mit speziellen Mischelementen), Doppelschneckenextruder, Kaskadenextruder, Entgasungsextruder, Mehrschneckenextruder, Stiftextruder, Schneckenkneter und Planetwalzenextruder, sowie Vielwellenreaktor geeignet. Bevorzugt werden gleichsinnig drehende Doppelschneckenextruder mit Entgasung (Planetwalzenextruder mit Entgasung) verwendet.

Die weitere Abmischung der erfindungsgemäßen Zusammensetzungen aus (gegebenenfalls) modifiziertem Mikrogel (B) und den thermoplastischen Werkstoffen (A) mit zusätzlichen Füllstoffen sowie gegebenenfalls üblichen Hilfsmitteln, wie oben erwähnt, kann in üblichen Mischaggregaten, wie Walzen, Innenmischern, Mehrwalzenstühlen, Dissolvern oder auch Mischextrudern, durchgeführt werden. Bevorzugte Mischtemperaturen liegen bei Raumtemperatur (23°C) bis 280°C, bevorzugt bei etwa 60°C bis 200°C.

Die Erfindung betrifft weiterhin die Verwendung der erfindungsgemäßen Zusammensetzungen zur Herstellung von thermoplastisch verarbeitbaren Formartikeln sowie die aus den erfindungsgemäßen Zusammensetzungen erhältlichen Formartikel. Beispiele derartiger Formartikel schließen ein: Steckverbindungen, Dämpfungs-, insbesondere Schwingungs- und Stoßdämpfungselemente, akustische Dämpfungselemente, Profile, Folien, insbesondere dämpfende Folien, Fußmatten, Bekleidung, insbesondere Schuheinlagen, Schuhe, insbesondere Schischuhe, Schuhsohlen, Elektronische Bauteile, Gehäuse für elektronische Bauteile, Werkzeuge, Dekorative Formkörper, Verbundwerkstoffe, Formteile für Automobile etc.

Die erfindungsgemäßen Formartikel können aus den erfindungsgemäßen Zusammensetzungen durch übliche Verarbeitungsverfahren für thermoplastische Elastomere hergestellt werden, wie durch Schmelzextrusion, Kalandrieren, IM, CM, und RIM.

Die vorliegende Erfindung wird durch die folgenden Beispiele weiter erläutert. Die Erfindung ist jedoch nicht auf den Offenbarungsgehalt der Beispiele beschränkt.

BEISPIELE:

1. Herstellung von Mikrogelen (B)

Herstellungsbeispiel 1 :

(NBR-basierendes Mikrogel aus peroxidischer Vernetzung (OBR 1102 C))

Die Herstellung des NBR-Mikrogels OBR 1102 C erfolgt wie in DE 19701487 beschrieben. Man geht von einem NBR-Latex aus. Der NBR-Latex weist folgende Merkmale auf: Gehalt an eingebautem Acrylnitril: 43 Gew.%, Feststoffkonzentration: 16 Gew.%, pH-Wert: 10,8, Durchmesser der Latexteilchen (dz): 140 nm, Teilchendichte: 0,9984 g/cm$^3$, der Gelgehalt des Latex beträgt 2,6 Gew.%, der Quellungsindex des Gelanteils in Toluol beträgt 18,5 und die Glastemperatur (Tg) beträgt -15°C.

Für die Herstellung von OBR 1102 C setzt man 7 phr Dicumylperoxid (DCP) ein.

Charakteristische Daten des erhaltenen Mikrogels sind in Tabelle 1 zusammengefasst.

Herstellungsbeispiel 2:

(SBR-basierendes Mikrogel aus peroxidischer Vernetzung (OBR 1046 C))

Die Herstellung des Mikrogels erfolgte durch Vernetzung eines SBR-Latex mit 40 Gew.% eingebautem Styrol (Krylene 1721 von Bayer France) in Latexform mit 1,5 phr Dicumylperoxid (DCP) und anschließender Pfropfung mit 5 phr Hydroxyethylmethacrylat (HEMA).

Die Vernetzung von Krylene 1721 mit Dicumylperoxid erfolgte wie in den Beispielen 1) - 4) der US 6127488 beschrieben, wobei für die Vernetzung 1,5 phr Dicumylperoxid eingesetzt wurden. Der zugrunde liegende Latex Krylene 1721 weist folgende Merkmale auf:

Feststoffkonzentration: 21 Gew.-%; pH-Wert: 10,4; Durchmesser der Latexteilchen: d10 = 40 nm; $d_z$ = 53 nm; d80 = 62 nm; $O_{spez.}$ = 121;

Teilchendichte: 0,9673 g/cm3, der Gelgehalt des Mikrogels beträgt 3,8 Gew.%, der Quellungsindex des Gelanteils beträgt: 25,8 und die Glastemperatur (Tg) beträgt -31,5°C.

Nach der Umsetzung mit 1,5 phr Dicumylperoxid weist das Produkt folgende charakteristischen Daten auf:

Feststoffkonzentration: 21 Gew.%; pH-Wert: 10,2; Durchmesser der Latexteilchen: d10 = 37 nm; d50 = 53 nm; d80 = 62 nm; Teilchendichte: 0,9958 g/cm3, der Gelgehalt des Mikrogels beträgt 90,5 Gew.%; der Quellungsindex des Gelanteils beträgt: 5,8 und die Glastemperatur (Tg) beträgt -6,5°C.

Die Hydroxylmodifikation des mit 1,5 phr vernetzten SBR-Latex erfolgt durch Pfropfung mit 5 phr Hydroxyethylmethacrylat. Die Umsetzung mit HEMA, die Stabilisierung und Aufarbeitung des hydroxylmodifizierten Latex erfolgte wie in US 6399706, Beispiel 2, beschrieben.
Die charakteristischen Daten des hydroxylmodifizierten SBR-Mikrogels sind in der Tabelle 1 zusammengefasst.
Vor Einsatz des Mikrogels in TPU wird es in einem Vakuumtrockenschrank der Firma Haraeus Instruments, Typ Vacutherm VT 6130, bei 100 mbar bis zur Gewichtskonstanz getrocknet.

Herstellungsbeispiel 3:

(SBR-basierendes Mikrogel aus Direktpolymerisation; Vernetzung mit DVB (OBR1126E))

Die Herstellung dieses Mikrogels erfolgte durch Copolymerisation von 23 % Styrol, 76 % Butadien und 1 % Divinylbenzol in Emulsion.

Herstellungsbeispiel 4

Mikrogel auf Basis von hydroxylmodifiziertem BR, hergestellt durch direkte Emulsionspolymerisation unter Verwendung des vernetzenden Comonomers Ethylenglykoldimethacrylat (OBR 1118).
Es werden 325 g des Na-Salzes einer langkettigen Alkylsulfonsäure (330 g Mersolat K30/95 der Bayer AG) und 235 g des Na-Salzes methylenverbrückter Naphthalinsulfonsäure (Baykanol PQ der Bayer AG) in 18,71 kg Wasser gelöst und in einem 40 l-Autoklaven vorgelegt. Der Autoklav wird 3mal evakuiert und mit Stickstoff beaufschlagt. Danach werden 9,200 kg Butadien, 550 g Ethylenglykoldimethacrylat (90%ig), 312 g Hydroxyethylmethacrylat (96%) und 0,75 g Hydochinonmonomethylether zugegeben. Die Reaktionsmischung wird unter Rühren auf 30°C aufgeheizt. Anschließend wird eine wässrige Lösung bestehend aus 170 g Wasser, 1,69 g Ethylendiamintetraessigsäure (Merck-Schuchardt), 1,35 g Eisen(II)-Sulfat*7H$_2$O, 3,47 g Rongalit C (Merck-Schuchradt) sowie 5,24 g Trinatriumphosphat*12H$_2$O zudosiert. Die Reaktion wird durch Zugabe einer wässrigen Lösung von 2,8 g p-Menthanhydroperoxid (Trigonox NT 50 der Akzo-Degussa) und 10,53 g Mersolat K 30/95, gelöst in 250 g Wasser gestartet. Nach 5 Stunden Reaktionszeit aktiviert man mit einer wässrigen Lösung bestehend aus 250 g Wasser, in dem 10,53 g Mersolat K30/95 und 2,8 g p-Menthanhydroperoxid (Trigonox NT 50) gelöst sind, nach. Bei Erreichen eines Polymerisationsumsatzes von 95-99 % wird die Polymerisation durch Zugabe einer wässrigen Lösung von 25,53 g Diethylhydroxylamin gelöst in 500 g Wasser, abgestoppt. Danach werden nicht umgesetzte Monomeren durch Strippen mit Wasserdampf aus dem Latex entfernt. Der Latex wird filtriert und wie im Beispiel 2 der US 6399706 mit Stabilisator versetzt, koaguliert und getrocknet.
Die charakteristischen Daten des SBR-Gels sind in Tabelle 1. zusammengefasst.

Herstellungsbeispiel 5

(NBR-basierendes Mikrogel aus peroxidischer Vernetzung (OBR 1102 B))

Ein NBR basierendes Mikrogel aus peroxidischer Vernetzung wurde wie in Herstellungsbeispiel 1 mit DCP von 5 anstelle von 7 phr hergestellt.

Tabelle 1: Eigenschaften der Mikrogele (B)

| Herstellungsbeispiel | Produkt-Bezeichnung | Mikrogel-Typ | Vernetzung [phr] | $D_Z$ [nm] | Ospez. [m²/g] | Dichte [g/cm³] | Gelgehalt [Gew.%] | QI | Tg [°C] | ΔTg [°C] | OH-Zahl [mg KOH/g Pol.] | Säurezahl |
|---|---|---|---|---|---|---|---|---|---|---|---|---|
| 1 | OBR 1102 C | NBR | DCP/7 | 132 | 462 | 1.0236 | 93.7 | 7,9 | -0,5 | 15,8 | 16,4 | 2,3 |
| 2 | OBR 1046 C | SBR | DCP/1,5 | 51 | 117 | 1.0112 | 96,3 | 5,9 | 4,5 | 33,8 | 10,3 | 8,4 |
| 3 | OBR 1126E | SBR | DVB/1,0 | - | - | - | 83,4 | 14,7 | -58,5 | 10,6 | 9,5 | 13,2 |
| 4 | OBR 1118 | BR | EGDMA/ 5% | 50 | 166 | 0,9245 | 99,1 | 7,7 | -79 | 7,6 | 21,9 | 3,4 |
| 5 | OBR 1102 B | NBR | DCP/5 | 129 | 478 | 1,0184 | 94,3 | 8,8 | -1,5 | 13,2 | 18 | 3,1 |

In der Tabelle bedeuten:

DCP: Dicumylperoxid
EGDMA: Ethylenglykoldimethacrylat
phr: parts per 100 rubber
$O_{spez}$.: spezifische Oerfläche in $m^2/g$
$d_z$: Der Durchmesser $\bar{d}_z$ ist nach DIN 53 206 als der Median- oder Zentralwert definiert, oberhalb und unterhalb dessen, jeweils die Hälfte aller Teilchengrößen liegt. Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung praktisch nicht ändert.
QI: Quellungsindex
Tg: Glastemperatur
$\Delta$Tg: Breite des Glasübergangs

Für die Bestimmung von Tg: und $\Delta$Tg wird das Gerät DSC-2 von Perkin-Elmer benutzt.

Quellungsindex QI

Der Quellungsindex QI wurde wie folgt bestimmt:

Der Quellungsindex wird aus dem Gewicht des in Toluol bei 23° für 24 Stunden gequollenen lösungsmittelhaltigen Mikrogels und dem Gewicht des trockenen Mikrogels berechnet:

Qi = Naßgewicht des Mikrogels /Trockengewicht des Mikrogels.

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 °C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird wie oben bereits erwähnt nach DIN 53402 bestimmt und entspricht der Menge KOH in mg, die erforderlich ist um ein g des Polymers zu neutralisieren.

Gelgehalt

Der Gelgehalt entspricht dem in Toluol unlöslichen Anteil bei 23°C. Er wird wie oben beschrieben bestimmt.

Glasübergangstemperatur

Die Glasübergangstemperaturen wurden wie oben erwähnt bestimmt.

Breite des Glasübergangs:

Die Breite des Glasübergangs wurde wie oben beschrieben bestimmt.

2. Allgemeine Vorschrift für den Mischprozeß im Innenmischer:

Die Herstellung der erfindungsgemäßen Zusammensetzungen erfolgt mit einem Laborinnenmischer (Rheocord 90, Mischkammer Rheomix 600 E, Fa. Haake) mit tangierenden Rotoren, Druckluftkühlung und einem Kammervolumen

von 350 cm$^3$. Das Mischen erfolgt bei einer Drehzahl von 100 U / min, einer Anfangskammertemperatur von 160 °C und einem Füllgrad von 70 %. Es werden Mischungen mit einem Kautschuk-Mikrogel (B) / thermoplastischen Werkstoff (A) in den angegebenen Verhältnissen von beispielsweise 80 / 20, 70 / 30, 60/ 40, 50 /50, 40 / 60, 30 / 70, 20 / 80,10 / 90 hergestellt. Hierzu wird zuerst der Thermoplast in den Mischer gegeben und innerhalb von 4 min aufgeschmolzen. Anschließend wird das Mikrogel zudosiert, der Stempel geschlossen und 8 min gemischt. Hierbei erfolgt ein Anstieg der Temperatur. Das Drehmoment durchläuft ein Maximum mit einem Endplateau. Nach dem Mischen werden optisch homogene Proben entnommen, die etwa die Färbung des Mikrogels aufweisen.

3. Nachweis der Morphologie

Der Nachweis der Morphologie erfolgt mit Hilfe von Transmission Elektronen Mikroskopie Aufnahmen (TEM) und mit Hilfe der Atomic Force Microscopy (AFM).

1. TEM:

Probenpräparation für die Transmissions-Elektronenmikroskopischen Untersuchungen

Kyo-Ultramikrotomie

Vorgehensweise:

Unter Kryobedingungen wurden mittels Diamantmesser Dünnschnitte mit einer Schnittdicke von ca. 70 nm hergestellt. Zur Verbesserung des Kontrastes kann mit $OsO_4$ kontrastiert werden.
Die Dünnschnitte wurden auf Kupfernetze übertragen, getrocknet und im TEM zunächst großflächig begutachtet. Darauf hin wurden mit 80 kV Beschleunigungsspannung bei 12.000 facher Vergrößerung, dargestellte Fläche = 833,7 * 828,8 nm, charakteristische Bildausschnitte mittels digitaler Bildsoftware zu Dokumentationszwecken gespeichert und ausgewertet.

2. AFM: Firma Topometrix Modell TMX 2010.

Für die Untersuchung wurden Glanzschnitte angefertigt und in das AF-Mikroskop übertragen. Die Aufnahmen wurden im Layered imaging Verfahren angefertigt.
Bei zu hoher Konzentration des Mikrogels, d.h. bei Überlagerung der Primärpartikel, kann vorher eine Verdünnung erfolgen.

**Patentansprüche**

1. Thermoplastische Elastomer-Zusammensetzung, enthaltend mindestens einen thermoplastischen Werkstoff (A), ausgewählt aus PA-6, PA-4, PA-66, PA-69, PA-610, PA-11, PA-12, PA 612, PA-MXD6 und thermoplastischen Elastomeren in Form von thermoplastischen Polyamiden (TPE-A) und mindestens ein nicht durch energiereiche Strahlung vernetztes, durch Emulsionspolymerisation erhaltenes Mikrogel (B) basierend auf Kautschukpartikeln, ausgewählt aus Polybutadien-Acrylnitril-Copolymerisaten (NBR)mit Acrylnitrilgehalten von 5 - 60 Gewichtsprozent, carboxylierten Nitrilkautschuken (X-NBR) und teil- bzw. vollhydrierten Nitrilkautschuken (HNBR), wobei die Mikrogele eine im wesentlichen einheitliche Kugelform aufweisen, und das Gewichtsverhältnis thermoplastischer Werkstoff (A) /Mikrogel (B) von 1 : 99 bis 99 : 1 beträgt

2. Thermoplastische Elastomer-Zusammensetzung nach Anspruch 1, **dadurch gekennzeichnet, dass** die Primärpartikel des Mikrogels (B) eine annähernd kugelförmige Geometrie aufweisen.

3. Thermoplastische Elastomer-Zusammensetzung nach einem der Ansprüche 1 bis 2, **dadurch gekennzeichnet, dass** die Abweichung der Durchmesser eines einzelnen Primärpartikels des Mikrogels (B), definiert als [(d1 - d2) / d2] x 100, worin d1 und d2 zwei beliebige Durchmesser eines beliebigen Schnittes des Primärpartikels sind und d1 > d2 ist, weniger als 250 % beträgt.

4. Thermoplastische Elastomer-Zusammensetzung nach Anspruch 3, worin die genannte Abweichung weniger als 50 % beträgt.

**5.** Thermoplastische Elastomer-Zusammensetzung nach einem der Ansprüche 1 bis 4, **dadurch gekennzeichnet, dass** die Primärpartikel des Mikrogels (B) eine durchschnittliche Teilchengröße von 5 bis 500 nm aufweisen.

**6.** Thermoplastische Elastomer-Zusammensetzung nach einem der Ansprüche 1 bis 5, **dadurch gekennzeichnet, dass** die Primärpartikel des Mikrogels (B) eine durchschnittliche Teilchengröße von weniger als 99 nm aufweisen.

**7.** Thermoplastische Elastomer-Zusammensetzung nach einem der Ansprüche 1 bis 6, **dadurch gekennzeichnet, dass** die Mikrogele (B) in Toluol bei 23°C unlösliche Anteile von mindestens etwa 70 Gew.-% aufweisen.

**8.** Thermoplastische Elastomer-Zusammensetzung nach einem der Ansprüche 1 bis 7, **dadurch gekennzeichnet, dass** die Mikrogele (B) in Toluol bei 23°C einen Quellungsindex von weniger als etwa 80 aufweisen.

**9.** Thermoplastische Elastomer-Zusammensetzung nach einem der Ansprüche 1 bis 8, **dadurch gekennzeichnet, dass** die Mikrogele (B) Glastemperaturen von -100°C bis +50°C aufweisen.

**10.** Thermoplastische Elastomer-Zusammensetzung nach einem der Ansprüche 1 bis 9, **dadurch gekennzeichnet, dass** die Mikrogele (B) eine Breite des Glasübergangsbereichs von größer als etwa 5 °C aufweisen.

**11.** Thermoplastische Elastomer-Zusammensetzung nach einem der Ansprüche 1 bis 10, **dadurch gekennzeichnet, dass** die thermoplastischen Werkstoffe (A) eine Vicat-Erweichungstemperatur von mindestens 50°C aufweisen.

**12.** Thermoplastische Elastomer-Zusammensetzung nach einem der Ansprüche 1 bis 11, **dadurch gekennzeichnet, dass** der Unterschied der Glastemperatur zwischen dem thermoplastischen Werkstoff (A) und dem Mikrogel (B) zwischen 0 und 250°C liegt.

**13.** Thermoplastische Elastomer-Zusammensetzung nach einem der Ansprüche 1 bis 12, **dadurch gekennzeichnet, dass** das Gewichtsverhältnis thermoplastischer Werkstoff (A) / Mikrogel (B) von 10 : 90 bis 90 : 10, besonders bevorzugt 20 : 80 bis 80 : 20 beträgt.

**14.** Thermoplastische Elastomer-Zusammensetzung nach einem der Ansprüche 1 bis 13, **dadurch gekennzeichnet, dass** sie zusätzlich mindestens ein übliches Kunststoffadditiv enthält.

**15.** Thermoplastische Elastomer-Zusammensetzung nach einem der Ansprüche 1 bis 14, **dadurch gekennzeichnet, dass** sie durch Mischen mindestens des thermoplastischen Werkstoffes (A) ausgewählt aus PA-6, PA-4, PA-66, PA-69, PA-610, PA-11, PA-12, PA 612, PA-MXD6 und thermoplastischen Elastomeren in Form von thermoplastischen Polyamiden (TPE-A) und des nicht durch energiereiche Strahlung vernetzten Mikrogel (B) basierend auf Kautschukpartikeln, ausgewählt aus Polybutadien-Acrylnitril-Copolymerisaten (NBR) mit Acrylnitrilgehalten von 5-60 Gewichtsprozent, carboxylierten Nitrilkautschuken (X-NBR) und teil- bzw. vollhydrierten Nitrilkautschuken (HNBR), wobei die Mikrogele eine im wesentlichen einheitliche Kugelform aufweisen, und das Gewichtsverhältnis thermoplastischer Werkstoff (A) /Mikrogel (B) von 1 : 99 bis 99 : 1 beträgt, erhältlich ist.

**16.** Thermoplastische Elastomer-Zusammensetzung nach einem der Ansprüche 1 bis 15, **dadurch gekennzeichnet, dass** das Mikrogel (B) funktionelle Gruppen aufweist.

**17.** Verfahren zur Herstellung von thermoplastischen Elastomer-Zusammensetzungen nach einem der Ansprüche 1 bis 16 durch Mischen mindestens eines thermoplastischen Werkstoffes (A), ausgewählt aus PA-6 (Nylon), PA-4, PA-66 (Perlon), PA-69, PA-610, PA-11, PA-12, PA 612, PA-MXD6 und thermoplastischen Elastomeren in Form von thermoplastischen Polyamiden (TPE-A) und mindestens eines nicht durch energiereiche Strahlung vernetzten, durch Emulsionspolymerisation erhaltenen Mikrogel (B) basierend auf Kautschukpartikeln, ausgewählt aus Polybutadien-Acrylnitril-Copolymerisat mit Acrylnitrilgehalten von 5-60 Gewichtsprozent, vorzugsweise 10-50 Gewichtsprozent (NBR), carboxylierten Nitrilkautschuken (X-NBR) und teil- bzw. vollhydrierten Nitrilkautschuken (HNBR), **dadurch gekennzeichnet, dass** die Herstellung des Mikrogels (B) vor dem Mischen mit dem thermoplastischen Werkstoff (A) erfolgt.

**18.** Thermoplastischen Elastomer-Zusammensetzungen, erhältlich nach den Verfahren nach Anspruch 17.

**19.** Verwendung der thermoplastischen Elastomer-Zusammensetzungen nach einem der Ansprüche 1 bis 16 als Masterbatch zur Einarbeitung in thermoplastische Werkstoffe.

20. Verwendung der thermoplastischen Elastomer-Zusammensetzungen nach einem der Ansprüche 1 bis 16 und 18 zur Herstellung von thermoplastisch verarbeitbaren Formartikeln.

21. Formartikel, erhältlich durch Formen der thermoplastischen Elastomer-Zusammensetzungen nach einem der Ansprüche 1 bis 16 und 18.

**Claims**

1. Thermoplastic elastomer composition comprising at least one thermoplastic material (A) selected from PA-6, PA-4, PA-66, PA-69, PA-610, PA-11, PA-12, PA 612, PA-MXD6 and thermoplastic elastomers in the form of thermoplastic polyamides (TPE-A) and at least one microgel (B) which has been obtained by emulsion polymerization and which has not been crosslinked by high-energy radiation and which is based on rubber particles selected from polybutadiene-acrylonitrile copolymers (NBR) having acrylonitrile contents of from 5 to 60 percent by weight, carboxylated nitrile rubbers (X-NBR) and partially or fully hydrogenated nitrile rubbers (HNBR), where the shape of the microgels is in essence uniformly spherical, and the ratio by weight of thermoplastic material (A) to microgel (B) is from 1:99 to 99:1.

2. Thermoplastic elastomer composition according to Claim 1, **characterized in that** the geometry of the primary particles of the microgel (B) is approximately spherical.

3. Thermoplastic elastomer composition according to either of Claims 1, and 2, **characterized in that** the deviation of the diameters of an individual primary particle of the microgel (B), defined as [(d1-d2)/d2] x 100, in which d1 and d2 are any two diameters of any desired section of the primary particle and d1 > d2 is less than 250%.

4. Thermoplastic elastomer composition according to Claim 3, in which the specified deviation is less than 50%.

5. Thermoplastic elastomer composition according to any of Claims 1 to 4, **characterized in that** the average size of the primary particles of the microgel (B) is from 5 to 500 nm.

6. Thermoplastic elastomer composition according to any of Claims 1 to 5, **characterized in that** the average size of the primary particles of the microgel (B) is less than 99 nm.

7. Thermoplastic elastomer composition according to any of Claims 1 to 6, **characterized in that** the microgels (B) comprise at least about 70% by weight of fractions insoluble in toluene at 23°C.

8. Thermoplastic elastomer composition according to any of Claims 1 to 7, **characterized in that** the swelling index of the microgels (B) in toluene at 23°C is less than about 80.

9. Thermoplastic elastomer composition according to any of Claims 1 to 8, **characterized in that** the glass transition temperatures of the microgels (B) are from -100°C to +50°C.

10. Thermoplastic elastomer composition according to any of Claims 1 to 9, **characterized in that** the width of the glass transition range of the microgels (B) is greater than about 5°C.

11. Thermoplastic elastomer composition according to any of Claims 1 to 10, **characterized in that** the Vicat softening point of the thermoplastic materials (A) is at least 50°C.

12. Thermoplastic elastomer composition according to any of Claims 1 to 11, **characterized in that** the glass transition temperature difference between the thermoplastic material (A) and the microgel (B) is from 0 to 250°C.

13. Thermoplastic elastomer composition according to any of Claims 1 to 12, **characterized in that** the ratio by weight of thermoplastic material (A) to microgel (B) is from 10:90 to 90:10, particularly preferably from 20:80 to 80:20.

14. Thermoplastic elastomer composition according to any of Claims 1 to 13, **characterized in that** it also comprises at least one conventional plastics additive.

15. Thermoplastic elastomer composition according to any of Claims 1 to 14, **characterized in that** it is obtainable through mixing at least the thermoplastic material (A) selected from PA-6, PA-4, PA-66, PA-69, PA-610, PA-11, PA-12, PA 612, PA-MXD6 and thermoplastic elastomers in the form of thermoplastic polyamides (TPE-A) and of the microgel (B) which has not been crosslinked by high-energy radiation and which is based on rubber particles selected from polybutadiene-acrylonitrile copolymers (NBR) having acrylonitrile contents of from 5 to 60 percent by weight, carboxylated nitrile rubbers (X-NBR) and partially or fully hydrogenated nitrile rubbers (HNBR), where the shape of the microgels is in essence uniformly spherical, and the ratio by weight of thermoplastic material (A) to microgel (B) is from 1:99 to 99:1.

16. Thermoplastic elastomer composition according to any of Claims 1 to 15, **characterized in that** the microgel (B) has functional groups.

17. Process for producing thermoplastic elastomer compositions according to any of Claims 1 to 16 through mixing of at least one thermoplastic material (A) selected from PA-6 (Nylon), PA-4, PA-66 (Perlon), PA-69, PA-610, PA-11, PA-12, PA 612, PA-MXD6 and thermoplastic elastomers in the form of thermoplastic polyamides (TPE-A) and at least one microgel (B) which has been obtained by emulsion polymerization and which has not been crosslinked by high-energy radiation and which is based on rubber particles selected from polybutadiene-acrylonitrile copolymers having acrylonitrile contents of from 5 to 60 percent by weight, preferably from 10 to 15 percent by weight (NBR), carboxylated nitrile rubbers (X-NBR) and partially or fully hydrogenated nitrile rubbers (HNBR), **characterized in that** the production of the microgel (B) takes place prior to the mixing with the thermoplastic material (A).

18. Thermoplastic elastomer compositions obtainable according to the processes according to Claim 17.

19. Use of the thermoplastic elastomer compositions according to any of Claims 1 to 16 as masterbatch for incorporation into thermoplastic materials.

20. Use of the thermoplastic elastomer compositions according to any of Claims 1 to 16 and 18 for producing thermoplastically processable moulded items.

21. Moulded items obtainable through moulding of the thermoplastic elastomer compositions according to any of Claims 1 to 16 and 18.

**Revendications**

1. Composition d'élastomère thermoplastique, contenant au moins un matériau thermoplastique (A), choisi parmi PA-6, PA-4, PA-66, PA-69, PA-610, PA-11, PA-12, PA 612, PA-MXD6 et des élastomères thermoplastiques sous forme de polyamides thermoplastiques (TPE-A) et au moins un microgel (B) obtenu par polymérisation en émulsion, non réticulé par irradiation avec un rayonnement à haute énergie, à base de particules de caoutchouc, choisi parmi des copolymérisats polybutadiène-acrylonitrile (NBR) ayant des teneurs en acrylonitrile de 5 - 60 % en poids, des caoutchoucs nitrile carboxylés (X-NBR) et des caoutchoucs nitrile partiellement ou totalement hydrogénés (HNBR), les microgels ayant une forme sphérique essentiellement homogène, et le rapport pondéral matériau thermoplastique (A)/microgel (B) valant de 1 : 99 à 99 : 1.

2. Composition d'élastomère thermoplastique selon la revendication 1, **caractérisée en ce que** les particules primaires du microgel (B) présentent une géométrie approximativement sphérique.

3. Composition d'élastomère thermoplastique selon la revendication 1 ou 2, **caractérisée en ce que** l'écart du diamètre d'une particule primaire individuelle du microgel (B), défini comme [(dl - d2) / d2] x 100, où d1 et d2 sont deux diamètres quelconques d'une section quelconque de la particule primaire et d1 est > d2, est inférieur à 250 %.

4. Composition d'élastomère thermoplastique selon la revendication 3, dans laquelle ledit écart est inférieur à 50 %.

5. Composition d'élastomère thermoplastique selon l'une quelconque des revendications 1 à 4, **caractérisée en ce que** les particules primaires du microgel (B) présentent une taille moyenne de particule de 5 à 500 nm.

6. Composition d'élastomère thermoplastique selon l'une quelconque des revendications 1 à 5, **caractérisée en ce que** les particules primaires du microgel (B) présentent une taille moyenne de particule de moins de 99 nm.

7. Composition d'élastomère thermoplastique selon l'une quelconque des revendications 1 à 6, **caractérisée en ce que** les microgels (B) comportent des fractions de particules, insolubles dans le toluène à 23 °C, d'au moins environ 70 % en poids.

8. Composition d'élastomère thermoplastique selon l'une quelconque des revendications 1 à 7, **caractérisée en ce que** les microgels (B) présentent dans le toluène à 23 °C un indice de gonflement inférieur à environ 80.

9. Composition d'élastomère thermoplastique selon l'une quelconque des revendications 1 à 8, **caractérisée en ce que** les microgels (B) présentent des températures de transition vitreuse de -100 °C à +50 °C.

10. Composition d'élastomère thermoplastique selon l'une quelconque des revendications 1 à 9, **caractérisée en ce que** les microgels (B) présentent une largeur de la plage de transition vitreuse de plus d'environ 5 °C.

11. Composition d'élastomère thermoplastique selon l'une quelconque des revendications 1 à 10, **caractérisée en ce que** les matériaux thermoplastiques (A) présentent une température de ramollissement Vicat d'au moins 50 °C.

12. Composition d'élastomère thermoplastique selon l'une quelconque des revendications 1 à 11, **caractérisée en ce que** la différence de la température de transition vitreuse entre le matériau thermoplastique (A) et le microgel (B) est comprise entre 0 et 250 °C.

13. Composition d'élastomère thermoplastique selon l'une quelconque des revendications 1 à 12, **caractérisée en ce que** le rapport pondéral matériau thermoplastique (A)/microgel (B) vaut de 10 : 90 à 90 : 10, de façon particulièrement préférée de 20 : 80 à 80 : 20.

14. Composition d'élastomère thermoplastique selon l'une quelconque des revendications 1 à 13, **caractérisée en ce qu'**elle contient en outre au moins un additif usuel pour matières plastiques.

15. Composition d'élastomère thermoplastique selon l'une quelconque des revendications 1 à 14, **caractérisée en ce qu'**elle peut être obtenue par mélange au moins du matériau thermoplastique (A), choisi parmi PA-6, PA-4, PA-66, PA-69, PA-610, PA-11, PA-12, PA 612, PA-MXD6 et des élastomères thermoplastiques sous forme de polyamides thermoplastiques (TPE-A) et du microgel (B) non réticulé par irradiation avec un rayonnement à haute énergie, à base de particules de caoutchouc, choisi parmi des copolymérisats polybutadiène-acrylonitrile (NBR) ayant des teneurs en acrylonitrile de 5 - 60 % en poids, des caoutchoucs nitrile carboxylés (X-NBR) et des caoutchoucs nitrile partiellement ou totalement hydrogénés (HNBR), les microgels ayant une forme sphérique essentiellement homogène, et le rapport pondéral matériau thermoplastique (A)/microgel (B) valant de 1 : 99 à 99 : 1.

16. Composition d'élastomère thermoplastique selon l'une quelconque des revendications 1 à 15, **caractérisée en ce que** le microgel (B) comporte des groupes fonctionnels.

17. Procédé pour la préparation de compositions d'élastomères thermoplastiques selon l'une quelconque des revendications 1 à 16, par mélange au moins un matériau thermoplastique (A), choisi parmi PA-6 (Nylon), Pua-4, PA-66 (Perlon), PA-69, PA-610, PA-11, PA-12, PA 612, PA-MXD6 et des élastomères thermoplastiques sous forme de polyamides thermoplastiques (TPE-A) et au moins d'un microgel (B) obtenu par polymérisation en émulsion, non réticulé par irradiation avec un rayonnement à haute énergie, à base de particules de caoutchouc, choisi parmi des copolymérisats polybutadiène-acrylonitrile ayant des teneurs en acrylonitrile de 5 - 60 % en poids, de préférence de 10 - 50 % en poids (NBR), des caoutchoucs nitrile carboxyle (X-NBR) et des caoutchoucs nitrile partiellement ou totalement hydrogénés (HNBR), **caractérisé en ce que** la préparation du microgel (B) s'effectue avant le mélange avec le matériau thermoplastique (A).

18. Compositions d'élastomères thermoplastiques, pouvant être obtenues conformément à un procédé selon la revendication 17.

19. Utilisation des compositions d'élastomères thermoplastiques selon l'une quelconque des revendications 1 à 16, en tant que mélange-maître pour l'incorporation dans des matériaux thermoplastiques.

20. Utilisation des compositions d'élastomères thermoplastiques selon l'une quelconque des revendications 1 à 16 et 18, pour la fabrication d'articles moulés aptes à la transformation thermoplastique.

**21.** Articles moulés, pouvant être obtenus par moulage des compositions d'élastomères thermoplastiques selon l'une quelconque des revendications 1 à 16 et 18.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 405216 A
- DE 4220563 A
- GB PS1078400 A
- DE 19701487
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 20030088036 A1
- EP 1262510 A1
- DE 3920332
- DE 3922103
- US 5536613 A
- DE 10035493
- JP 02053803 A
- US 4173556 A
- US 5075280 A
- EP 0153587 A
- EP 0259097 A
- EP 0122516 A
- DE 19921415 A
- US 5013793 A
- EP 854171 A
- US 5302696 A
- US 5442009 A
- US 2187146 A
- US 6127488 A
- US 6399706 B

**In der Beschreibung aufgeführte Nicht-Patentliteratur**

- *Chinese Journal of Polymer Science,* 2002, vol. 20 (2), 93-98
- **LACKE ; DRUCKFARBEN.** Römpp Lexikon. Georg Thieme Verlag, 1998
- **HOUBEN-WEYL.** Methoden der organischen Chemie. vol. 14/2, 848
- **H.G. ELIAS.** Makromoleküle, Band 2, Technologie. 1992, vol. 2, 99 ff
- **H.G. ELIAS.** Makromoleküle. Wepf Verlag, 1992, vol. 2, 443 ff
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250, 8